# EUROPEAN PATENT SPECIFICATION

(11) **EP 3 328 581 B1**
(45) Date of publication and mention of the grant of the patent: **07.09.2022**
(21) Application number: 16774545.4
(22) Date of filing: 28.07.2016
(51) Int. Cl.: B23K 20/12, B23P 6/00, B23K 101/10

(54) **REPAIR OF PIPELINE WELDS USING FRICTION STIR PROCESSING**
REPARATUR VON ROHRLEITUNGSSCHWEISSNÄHTEN MITTELS REIBRÜHRSCHWEISSEN
RÉPARATION DE SOUDURES DE PIPELINES PAR SOUDAGE PAR FRICTION ET MALAXAGE

(30) Priority: 29.07.2015 GB 201513364
(43) Date of publication of application: 06.06.2018
(73) Proprietor: Acergy France SAS, 92150 Suresnes (FR)
(72) Inventor: TOGUYENI, Grégory Alexandre, 92250 La Garenne-Colombes (FR)
(74) Representative: Cummings, Sean Patrick
(86) International application number: PCT/IB2016/001311
(87) International publication number: WO 2017/017532

(56) References cited:
- WO-A2-2007/089649
- JP-A- 2000 042 762
- JP-A- 2015 110 253
- US-A1- 2005 035 173
- TWI-The Welding Institute: "Friction stir welding adopted for invisible stainless repair - Case Study 473", , 29 March 2014 (2014-03-29), XP055325804, Retrieved from the Internet: URL:http://www.twi-global.com/news-events/ case-studies/friction-stir-welding-adopted -for-invisible-stainless-repair-473/ [retrieved on 2016-12-05] & TWI-The Welding Institute: "Friction stir welding adopted for invisible stainless repair - Case Study 473", , 29 March 2014 (2014-03-29), XP055325805, Retrieved from the Internet: URL:https://web.archive.org/web/2014032904 0002/http://twi-global.com/news-events/cas e-studies/friction-stir-welding-adopted-fo r-invisible-stainless-repair-473/ [retrieved on 2016-12-05]

## Description

This invention relates to the use of friction stir welding (FSW) techniques in friction stir processing (FSP) of pre-existing welds to remedy weld defects. The invention relates particularly to the problems of using FSP to repair circumferential girth welds between successive pipeline sections such as pipe joints or pipe stalks. Such pipelines are common in the subsea oil and gas industry, where they are characterised by materials and wall thicknesses that can make the adoption of FSP particularly challenging.

The invention may have benefit in support of any operation in which pipe lengths are girth-welded end-to-end for subsea use, such as in S-lay or J-lay operations, when fabricating pipes at a spoolbase for reel-lay operations, or when fabricating offshore tie-ins. In this respect, the invention is applicable to any of the following welding positions, which are determined by the pipe orientation and whether the pipe is fixed or turning about its longitudinal axis during welding:
for S-lay operations and for welding at spoolbases, with the pipe on a horizontal axis - the '5G' position if the pipe is fixed or the '1G' position if the pipe is turning;
for J-lay operations, with the pipe fixed on a vertical axis - the '2G' position; and
for fabrication of offshore tie-ins, with the pipe fixed on an inclined axis between vertical and horizontal - the '6G' position.

'1G', '2G', '5G' and '6G' are globally-recognised expressions for these welding positions, as used by the American Welding Society (AWS).

Fusion welding techniques involve melting abutting parts along their mutual interface. Such techniques are still used predominantly for welding together pipeline sections to fabricate a subsea pipeline, which is most commonly made of carbon steel or a corrosion-resistant alloy (CRA). Some non-limiting examples of fusion welding techniques are gas tungsten arc welding (GTAW) (also known as tungsten inert gas (TIG) welding), gas metal arc welding (GMAW) (also known as metal inert gas (MIG) or metal active gas (MAG) welding), submerged arc welding (SAW) and shielded metal arc welding (SMAW).

Fusion welding is chosen to suit the hard metal alloys that are typically used in subsea pipelines and to suit the typical thickness of such workpieces, noting that steel pipes for deep-water use could have a wall thickness of up to about 80mm. Fusion welding is also favoured for its short cycle time if, as is common, welding is on the critical path for pipelaying.

After a weld has been made, non-destructive testing (NDT) such as radiography or ultrasonic testing must be performed on the weld to detect welding defects before the pipeline is laid or used. Any defect or flaw that is deemed to be unacceptable has to be rectified. Only after passing NDT can the weld be coated with a field joint coating to be ready for launching into the sea as part of a pipeline.

Rectifying an unacceptable defect found upon inspection of a weld involves either repairing the defect or cutting out the welded region and repeating the entire welding operation. Repairing the defect is preferred, where possible.

Conventionally, repairing a pipeline weld involves re-welding the defective zone, including re-melting the weld by the same fusion welding process that was used to produce the original weld. This exacerbates a problem of fusion welding, because its high temperature initiates metallurgical phase changes that may adversely modify the mechanical properties of the area around the weld. These changes may, for example, manifest themselves in reduced fatigue performance, particularly in the heat-affected zone (HAZ) in which base metal beside the welded joint is not melted but is affected metallurgically by temperature cycling.

Friction stir welding (FSW) is known as an alternative to fusion welding. FSW techniques are also used in friction stir processing (FSP), which can be employed to remove defects in a welded joint already made, whether that weld was made by FSW, fusion welding or otherwise. For example, US 8141768 describes general welding by FSW and repair of pipeline cracks by FSP. Consequently, references to FSW in the following description apply also to FSP in general terms, albeit that some parameters may be adjusted between the respective processes.

FSW is performed at a joint between abutting metal parts. A specially-profiled probe, pin or tip protruding from the end of a rapidly-rotating tool is driven into and then traversed along the joint. The tool spins about an axis that is substantially perpendicular to the surface of the metal into which the probe is driven.

Friction between the rotating probe and the stationary parts generates heat that is sufficient to soften - but not to melt - the metal of the parts. As the heat of friction determines the temperature and hence the viscosity of the metal, the forces applied to the tool and its spin speed must be controlled carefully. For example, a thermocouple may be used to sense the probe temperature and to feed signals to a digital control system that drives the various movements of the tool automatically.

Whilst FSW is regarded as a substantially solid-state process, the metal of the abutting parts adjacent to the probe undergoes a temporary transformation into a plasticised state. When in the plasticised state, the metal experiences highly dynamic fluid flow driven by the spin of the probe.

The rapid stirring action of the rotating probe intermixes the softened metal of the two parts along the region of their abutting interface. This intense deformation adds further heat to the metal. Simultaneously, mechanical forging pressure is applied by a shoulder of the tool around the probe to consolidate the weld region. The forging pressure exerted by the tool is resisted by a weld backing member that is positioned in opposition to the tool about the weld.

As the tool advances, plasticised metal is forced behind the probe and is left behind as the probe traverses further along the joint. There, the weld consolidates before the plasticised metal cools and hardens.

The main mechanical forces that act on a rotating tool during FSW are as follows:
a z-axis force toward the abutting metal parts, which is necessary to plunge the probe into the metal and to maintain the probe at an appropriate depth below the surface of the metal;
an x-axis traverse force acting in a tool traverse direction aligned with the direction of tool motion along the joint, arising from resistance of the softened metal to that motion of the tool; and
torque required to rotate the tool, which will depend on the z-axis force, friction between the probe and the metal of the parts being joined and the resistance of that metal, when softened, to flow around the probe when stirred by the probe.

A key characteristic of FSW is that welding takes place at a temperature below the melting point of the metal from which the welded parts are made. Another characteristic of FSW is that no filler metal is added between the welded parts. In this respect, the probe is a non-consumable item although it is, of course, subject to wear and replacement in extended use.

The main advantage of FSW over traditional fusion-welding methods is an improvement in the quality of the weld because of the lower processing temperature, especially an improvement in fatigue performance. Particular advantages of FSW over fusion welding arise from avoiding problems associated with cooling from the liquid phase, notably redistribution of solutes, porosity and solidification cracking. Thus, repairing a weld defect by an analogous FSP technique not only mitigates degradation of the metallurgical condition of the original weld; FSP may even improve the metallurgical condition of the original weld while repairing a defect in that weld.

Following its introduction, FSW gained rapid acceptance for use on metals with a low softening temperature such as aluminium alloys. Inexpensive tools made of hardened tool steels provide sufficient hardness and abrasion resistance for use with such metals. FSW has been used with such metals in the aerospace, marine and transportation industries for several years.

It is only recently that tool materials and geometries have been devised to perform FSW on metals with a high softening temperature, such as steels. Even now, though, FSW techniques are at the limit of their applicability when used for the alloys and wall thicknesses that are typical of welded subsea pipelines. Similar concerns apply to repairing weld defects in such pipelines by FSP techniques.

Performing FSW on ferrous alloys such as steels - and indeed on many nonferrous alloys - requires a tool and especially a probe with the thermal stability to withstand temperatures of around 900 to 1200 Celsius. Achieving consistent welds at such high temperatures while achieving sufficient wear-resistance and mechanical strength under high loads places extraordinary demands on the tool.

An example of a tool for performing FSW on metals with a high softening temperature is offered by MegaStir Technologies LLC of Utah, USA. The tool comprises a shank of tungsten carbide that is held in a liquid-cooled tool holder to manage heat removal. A locking collar attaches a replaceable probe of polycrystalline cubic boron nitride to the shank so as to transmit torque from the shank to the probe during FSW.

Developments in the FSW art have led to proposals to use FSW for butt-welding of steel pipe joints. For example, WO 2010/074755 proposes butt-welding of single-wall unlined pipes involving an FSW step. First, a root pass weld is performed inside a pipe by fusion welding to create a solid backing root bead. Subsequently, FSW is used on the external side to complete the weld. JP2000042762, which discloses a system according to the preamble of Claim 14, describes an FSW joining method in which FSW is used to join two abutted aluminium pipe parts. To avoid a hole or recess being created when an FSW probe is pulled out of the pipe, an abutting member is applied to the pipe after joining, and the probe is moved to the abutting member.

US 7270257 teaches another FSW solution for welding pipes. It employs external clamps to hold the ends of abutting pipe lengths, which clamps are mounted on the same movable support arm as an FSW tool. A backing mandrel within the pipe can be expanded radially in various ways, such as by inflation.

WO2007/089649 discloses a method of repairing a defect in a pre-existing circular butt weld of a pipeline of steel or other ferrous or non-ferrous alloy, by advancing a friction stir processing tool along a weld -processing path around the pipeline, the weld-processing path extending along the weld in a generally circumferential direction with respect to the pipeline and pressing a shoulder of the tool against a running surface while moving the tool around an axis of rotation.

The main drawbacks of FSW, which have historically limited its industrial application to welding softer alloys, are: a slow cycle time for welding hard metals; the lack of durability and high cost of the welding probe; limited workpiece thickness (typically a maximum of 35mm to 50mm, although currently such thicknesses can only be achieved using double-sided welding) and a requirement for strong mechanical backing because of the high loads exerted on the workpiece.

As a result of these drawbacks, FSW is still not widely used for the industrial-scale fabrication of conventional carbon steel or corrosion-resistant alloy (CRA) pipeline as used to transport oil or gas. However, cycle time is of secondary importance when a weld defect requires repair, meaning that FSP techniques may gain wider acceptance for weld repair if other challenges can be overcome.

The invention is particularly concerned with the challenges of starting and finishing a part-circumferential pass of a rotating tool along a weld to be repaired by FSP. In this respect, the probe of the tool has to remain substantially perpendicular to the surface of the workpiece to manage high mechanical loads, which is difficult to achieve when welding along the cylindrical bodies of pipe section. Also, the probe may leave a poor interface at the entry point and leave a hole at the exit point. This itself requires time-consuming rectification, such as filling the hole with weld material, and introduces discontinuities that may concentrate stress and lessen fatigue life.

US 5713507 addresses this issue for a flat plate, which defines a planar interface, by ramping the excursion profile of an FSW probe down into the workpiece at the start of a welding pass and up out of the workpiece at the end of the welding pass. Nevertheless, the surface of the workpiece left behind after welding may be left with irregularities where the weld pass began and ended with entry and exit of the probe. Also, this kind of controlled ramped profile is difficult to achieve on a workpiece with a curved surface such as a pipe. This is especially so where the interface is uneven, such as the surface of a weld to be repaired by FSP.

It is known to attach a sacrificial run-off tab to a workpiece to allow the pass of a rotating FSW tool to extend beyond the workpiece. This locates the exit hole in the tab, which can subsequently be removed from the workpiece. For example, US 7225968 describes the use of FSP for repairing very shallow cracks, of just 0.5mm depth, on a pipe surface. The possibility of using a run-off tab is mentioned in US 7225968, although the run-off tab is neither described nor shown. In any event, the run-off tab is optional because of the minimal penetration of the probe and the absence of a sharp radius on the probe, which may allow crack repairs to be performed without using a run-off tab at all.

Using FSP to repair superficial surface cracks, as disclosed in US 7225968, must be distinguished from the much greater challenge of repairing weld defects in thick steel workpieces. The latter involves far deeper penetration of the tool probe used in FSP. This presents a very different problem if the probe is to survive high temperatures and stresses while producing a high-quality weld repair.

Other documents, such as JP2003094174, US2010096438, JP2015147253, JP2015110253 and US2014027497 describe FSW processes for welding together flat plates in which tabs are employed and FSW tools are vertically lowered onto the tabs. However, such documents are concerned with the initial welding processes, rather than repair, and are not concerned with the welding of pipe sections. Such documents therefore do not address the particular problems associated with repairing welds between cylindrical pipe sections, in which a circular weld trajectory must be followed.

It is against this background that the present invention has been devised.

In one sense, the invention resides in a method of using FSP to repair a defect in a pre-existing circular butt weld of a pipeline of steel or other ferrous alloy. Potentially, the invention is also applicable to non-ferrous alloys such as nickel-based alloys.

The method of the invention comprises attaching run-on and run-off tabs to the pipeline on respective sides of the defect and then advancing an FSP tool into the run-on tab. The tool is moved from the run-on tab to the run-off tab along a weld-processing path that incorporates the defect to repair the defect by friction stir processing of a portion of the weld along the path, the weld-processing path extending along the weld in a generally circumferential direction with respect to the pipeline. A shoulder of the tool is pressed against a running surface while moving the tool along the weld-processing path and spinning the tool around an axis of rotation, the running surface comprising respective running faces of the run-on and run-off tabs. Once the defect is repaired, the tool is removed from the run-off tab. The run-on and run-off tabs may then be removed from the pipeline.

The invention allows a repair weld to be performed using an FSP tool on a girth weld, with the exit hole and weld start defects of FSP being located on sacrificial pieces that can be removed to leave a sound repair weld.

The axis of rotation is preferably kept substantially orthogonal to the running surface while moving the tool along the weld-processing path.

The running surface may lie wholly outside the pipeline, being defined only by the running faces of the tabs, in which case the shoulder of the tool may be moved along the weld-processing path directly between the running faces.

The running surface may instead also incorporate part of the outer surface of the pipeline. Thus, the shoulder of the tool may be pressed against an outer surface of the pipeline disposed between the running faces of the run-on and run-off tabs during movement of the tool along the weld-processing path. In that case, the axis of rotation of the tool may be reoriented as the shoulder runs over the outer surface of the pipeline, so as to correspond with circumferential progress of the tool around that outer surface.

The tool may be moved in a substantially straight line along the weld-processing path, in which case the axis of rotation may be maintained in a fixed orientation while moving the tool along the weld-processing path. The shoulder of the tool may instead be moved from a running face portion of the run-on tab to a running face portion of the run-off tab, which portions lie in respective mutually-intersecting planes. In that case, the axis of rotation is suitably reoriented while the shoulder moves between those portions. The mutually-intersecting planes may, for example, intersect the pipeline.

The axes of rotation when the shoulder is on the respective running face portions may converge or diverge in a radially inward direction with respect to the pipeline.

With movement of the tool along the weld-processing path, a probe of the tool is advantageously ramped from the run-on tab radially inwardly into a wall of the pipeline toward the defect, then radially outwardly out of the wall of the pipeline from the defect into the run-off tab.

The run-on and run-off tabs may be attached together to the pipeline as parts of a single repair fitting, for example as integral parts of a single body that is attached to the pipeline.

The run-on and/or run-off tabs may be heated before advancing the tool into the run-on tab and/or while effecting relative movement of the tool from the run-on tab toward the run-off tab along the weld-processing path.

As internal back-up member may be positioned against an internal surface of the pipeline in opposition to inward force applied by the tool.

To put the method of the invention into effect, the inventive concept extends to a friction stir processing system for repairing a defect in a pre-existing weld of a pipeline of steel or other ferrous alloy. The system of the invention comprises a friction stir processing tool and generally wedge-shaped run-on and run-off tabs that each comprise an inner seating face and an outer running face that converges with the inner seating face, the tabs being attachable to the pipeline to taper toward each other about the circumference of the pipeline. The run-on and run-off tabs are configurable to be spaced apart by a gap where an outer surface of the pipeline is exposed. The system further comprises tightenable straps that are arrangeable to clamp the run-on and run-off tabs to the pipeline, and an adjustable intermediate strap portion that is arrangeable to connect and space apart the run-on and run-off tabs.

Preferably, the inner seating face of each tab is concave-curved with a part-circular cross-section. The tabs are suitably positioned in mirror-image mutual opposition.

The outer running face and the inner seating face may meet at an edge. For example, the curvature of the inner seating face preferably follows a circle that the outer running face substantially intersects tangentially.

The tabs may be spaced apart by a gap where an outer surface of the pipeline is exposed, or may instead be conjoined by a web or abut each other.

The outer running faces of the tabs may be substantially coplanar, for example being parts of a running surface that is substantially planar along its length. At least portions of the running faces of the respective tabs may instead lie in respective mutually-intersecting planes. The mutually-intersecting planes may intersect at an angle of less than or greater than 180° on their radially outer side with respect to the pipeline.

In summary, the invention provides a method to repair a pre-existing weld of a steel or steel-based alloy pipeline. That weld is a circular butt weld. Repair by re-welding is conveniently performed from outside the pipeline.

The method comprises the steps of: attaching a run-on tab on one side of the defect to be repaired; attaching a run-off tab on the other side of the defect to be repaired; lowering an FSW tool into the run-on tab; displacing the friction stir welding tool towards the run-off tab to re-weld the zone along the path of said tool; removing the tool; and then preferably removing the run-on and run-off tabs.

The tabs may be ramp-shaped, with an inner circular side that complies with pipeline outer wall surface and an outer side to guide the pin or probe of an FSW tool. Advantageously, the shape of the tabs is such that the pin or probe is always perpendicular to the surface being re-welded. Preferably, the shape of the tabs is such that the trajectory of the pin or probe in the pipeline ramps down from the run-on tab to the point of repair, then up from the point of repair to the run-off tab. The maximum slope of that trajectory may, for example, be 5°.

The shape of the tabs may be such that the path of the welding tool from the entry point to the exit point is substantially linear in the transverse cross-section of the pipeline.

It is preferred that the repair method of the invention is performed automatically under the control of an automated controller. It is also preferred for a mechanical backing system to be inserted into the pipe.

The tabs may be pre-heated before repair of the weld by any heating means known to those skilled in the art, such as gas burners or induction. It is also possible for the tabs to comprise electrical heating wires or elements, or to comprise bores for circulation of heating or cooling fluid. However, as the tabs are regarded as consumables that are destroyed during the repair process, heating or cooling means are preferably external to the tabs.

Starting the repair weld on a sacrificial run-on tab clamped on the outer surface of the weld allows repair weld defects associated with the start of an FSW pass to be on a sacrificial piece that will be removed after the repair is completed. The FSW tool then travels along the circumference of the initial weld containing the flaw to be removed, reconsolidating the initial weld.

The repair weld is finally ended on a sacrificial run-off tab clamped on the outer surface of the weld at the other end of the repair section. This allows the exit hole associated with the end of the repair weld to be on a sacrificial piece that will be removed after the repair is completed. The procedure may be applied to any surface or volumetric flaw through all or part of the thickness of the pipe wall.

Preheating the tabs before repair welding may or may not be required, depending upon the thickness of the pieces to be welded and the welding speed. It may be necessary or desirable to preheat the tabs and the mother pipe if the heat transfer by conduction between the tabs and the mother pipe is limited. In that case, the FSWtool could pass from a hotter material to a colder material at the interface, which would generate high loads on the tool.

In order that the invention may be more readily understood, reference will now be made, by way of example, to the accompanying drawings in which:
Figure 1 is a schematic side view of abutting pipe sections joined by a circumferential girth weld;
Figure 2 is a schematic cross-sectional view taken through the weld on line II=II of Figure 1, showing a defect in the weld;
Figure 3 is a schematic plan view of the abutting pipe sections shown in Figure 1 ready for repairing the weld in accordance with the invention, with run-on and run-off tabs secured to the pipe sections at circumferentially-offset positions around the defect in the weld;
Figure 4 is a schematic cross-sectional view taken through the weld and the run-on and run-off tabs on line IV-IV of Figure 3, showing the weld now undergoing FSP in accordance with the invention;
Figure 5 is a schematic cross-sectional view taken through the weld as in Figure 2, showing a variant of the invention in which the run-on and run-off tabs are integrated into a single body and an FSP tool follows a straight path;
Figure 6 is a schematic cross-sectional view taken through the weld as in Figure 2, showing another variant of the invention in which an FSP tool follows a convex path with respect to the pipe sections; and
Figure 7 is a schematic cross-sectional view taken through the weld as in Figure 2, showing another variant in which an FSP tool follows a concave path with respect to the pipe sections.

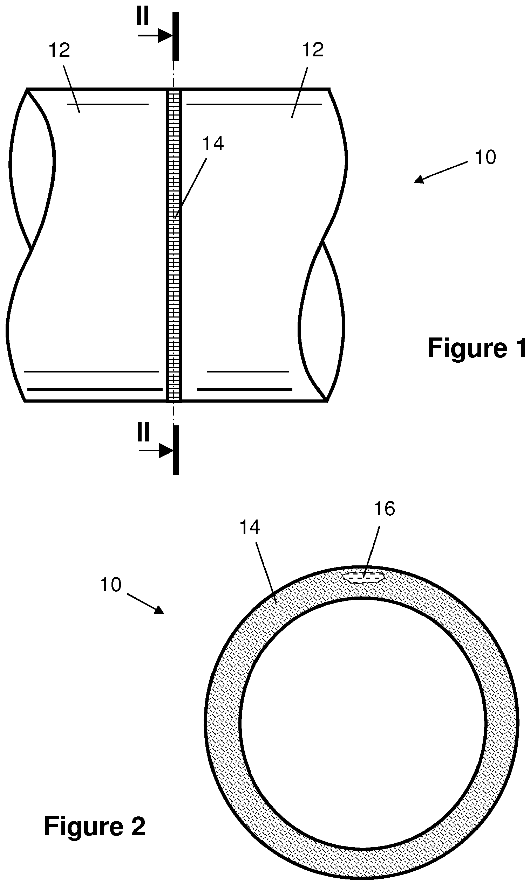

Figure 1 shows a pipeline 10 that comprises abutting pipe sections 12 of carbon steel joined end-to-end by a planar circumferential girth weld 14. The weld 14 will typically have been produced by multi-pass fusion welding although, in principle, other welding techniques such as FSW could have been used instead.

A defect 16 in the weld 14 is apparent in the cross-sectional view of Figure 2, which defect 16 may be detected by NDT.

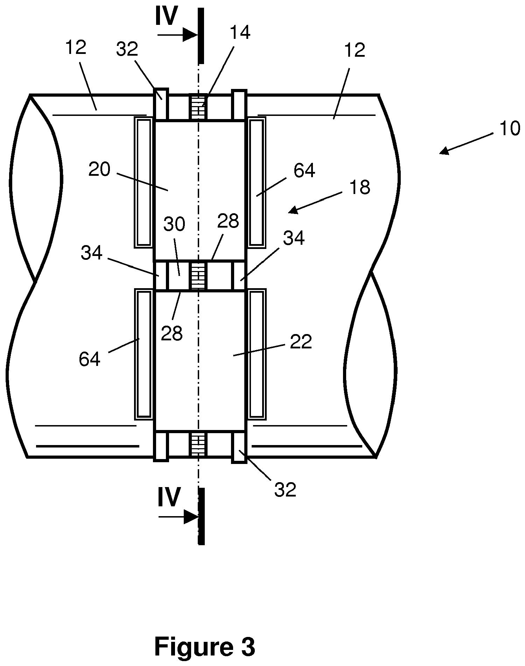

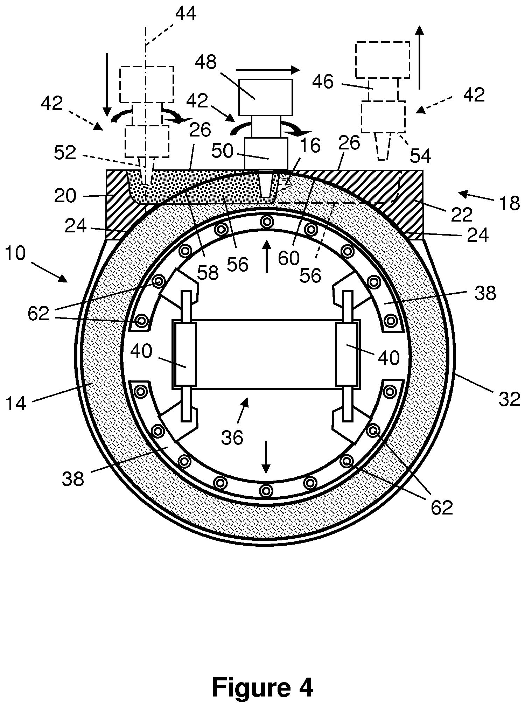

Figures 3 and 4 show a repair fitting 18 in accordance with the invention. The repair fitting 18 is attached to the pipeline 10 in alignment with the weld 14 for repairing the defect 16.

The repair fitting 18 comprises a run-on tab 20 and a run-off tab 22 that are circumferentially aligned with each other and placed onto the pipeline 10 on respective opposed circumferential sides of the defect 16. The tabs 20, 22 are substantially solid, generally wedge-shaped bodies of cast and/or machined steel, preferably of the same carbon steel as the pipe sections 12 of the pipeline 10. The wedge shapes of the tabs 20, 22 taper toward each other about the circumference of the pipeline 10.

The cross-sectional view of Figure 4 shows that each tab 20, 22 comprises a concave-curved inner face 24 of part-circular cross-section, whose radius of curvature substantially matches that of the outer surface of the pipeline 10. This curvature of the inner face 24 allows the tab 20, 22 to seat closely against the pipeline 10. Each tab 20, 22 further comprises a substantially flat outer face 26. The outer face 26 converges with the inner face 24 to meet at a thin edge 28, as can be seen in the plan view of Figure 3.

The curvature of the inner face 24 follows a circle that lies in the plane of the weld 14 when the tab 20, 22 is seated against the pipeline 10. The diameter of that circle substantially matches the outer diameter of the pipeline 10. Allowing for the minimal thickness of the edge 28, the outer face 26 nearly intersects that circle tangentially, at least where the outer face 26 approaches the edge 28. Thus, when the inner face 24 of a tab 20, 22 is seated onto the pipeline 10, the outer face 26 extends substantially tangentially with respect to the outer surface of the pipeline 10.

The tabs 20, 22 are placed over the weld 14 on the pipeline 10 in mirror-image mutual opposition centred on the radial position of the defect 16. The tabs 20, 22 taper toward each other and so present their edges 28 to each other in mutual opposition, in this example across a narrow gap 30 between the tabs 20, 22 where the outer surface of the pipeline 10 is exposed, as best appreciated in the plan view of Figure 3. The gap 30 is aligned radially with the defect 16, although the defect 16 may extend circumferentially beyond the gap 30.

In the example shown in Figures 3 and 4, the flat outer faces 26 of the tabs 20, 22 substantially align in a common plane that is substantially tangential to the outer surface of the pipeline 10. That plane intersects the outer surface of the pipeline 10 in the gap 30 between the tabs 20, 22.

In this example, the tabs 20, 22 are attached to the pipeline 10 by clamping forces exerted by tightening longitudinally-spaced straps 32. The straps 32 encircle the pipeline 10 under tension and lie in spaced parallel planes to straddle the weld 14 between them. Intermediate strap portions 34 also connect and space apart the tabs 20, 22 to define the gap 30 between the edges 28 of the tabs 20, 22.

Figure 4 shows a weld-backing device 36 inserted into the pipeline 10 in axial alignment with the weld 14. The weld-backing device 36 comprises back-up ring segments 38 that are driven radially by actuators 40. Initially the ring segments 38 are retracted radially inwardly for insertion of the weld-backing device 36 into the pipeline 10. When the weld-backing device 36 is in alignment with the weld 14, the ring segments 38 are extended radially outwardly as shown in Figure 4 to apply back-up force against the inner wall of the pipeline inside the weld 14.

The radially-outward back-up force applied by the ring segments 38 resists high inward z-axis loads that are applied in use through a rotary FSP tool 42 facing toward the pipeline 10. In this way, the back-up force resists inward radial deformation or deflection of the pipeline 10 or the weld 14 during an FSP operation.

The FSP tool 42 is rotationally symmetrical about its central longitudinal axis 44, comprising:
a shank 46 coupled at its proximal end to a motor 48 that supports and spins the FSP tool 42 about the axis 44;
a probe holder 50 at the distal end of the shank 46; and
a probe 52 protruding distally from the probe holder 50 toward the pipeline 10.

The probe holder 50 defines a shoulder 54 around the probe 52 to exert inward forging pressure on the softened metal during an FSP operation. Thus, the shoulder 54 extends substantially orthogonally from the central longitudinal axis 44.

The probe 52 has a frusto-conical shape that tapers distally from the shoulder 54. The length of the probe 52 measured from the shoulder 54 to the tip of the probe 52 is slightly less than the wall thickness of the pipeline 10.

The FSP tool 42 is driven by the motor 48 to spin at a controlled speed about the central longitudinal axis 44, which therefore serves as an axis of rotation for the FSP tool 42. As will be exemplified in later embodiments, the FSP tool 42 is also mounted and driven for translational movements with respect to the pipeline 10. Those translational movements comprise advancing or retracting the spinning FSP tool 42 on the z-axis along the central longitudinal axis 44 and traversing the spinning FSP tool 42 transversely to the central longitudinal axis 44, on the x-axis along the weld 14. The direction of traverse may, for example, be substantially orthogonal to the central longitudinal axis 44. As will also be explained, there is a further option to pivot the spinning FSP tool 42 with respect to the pipeline 10.

To illustrate the z-axis and x-axis movements of the FSP tool 42, Figure 4 shows the FSP tool 42 in three states during an FSP pass.

To the left in Figure 4, in dashed outline, the FSP tool 42 is shown near the start of the FSP pass where the probe 52 begins to enter the run-on tab 20. Here, the spinning FSP tool 42 is being advanced distally along the z-axis into the flat outer face 26 of the run-on tab 20. It will be noted that the probe 52 enters the outer face 26 substantially orthogonally and that the shoulder 54 lies in a plane parallel to the outer face 26.

Insertion of the probe 52 into the run-on tab 20 starts to create a thermo-mechanically affected zone (TMAZ) 56, which is a region that is affected metallurgically by both temperature cycling and plastic deformation. It is in the TMAZ 56 that the metal of the run-on tab 20 is softened and stirred.

The z-axis movement of the FSP tool 42 continues until the probe 52 is fully inserted into the run-on tab 20, with the shoulder 54 of the probe holder 50 then bearing flat against the outer face 26. The shoulder 54 bears against the outer face 26 to limit insertion of the probe 52 and to apply forging pressure to the softened metal in the TMAZ 56.

The TMAZ 56 extends around the frusto-conical side wall of the probe 52 and also distally beyond the tip of the probe 52. Thus, the TMAZ 56 is slightly wider than the width of the probe 52 and extends slightly deeper into the run-on tab 20 than the depth or length of the probe 52.

Next, while maintaining this depth of insertion of the probe 52 as the shoulder 54 continues to bear against the outer face 26, the FSP tool 42 is traversed along the x-axis across the run-on-tab 20 toward the run-off tab 22. During this x-axis traversal, the probe 52 crosses the thin convex-curved interface 58 between the run-on tab 20 and the outer surface of the pipeline 10, more specifically the outer surface of the weld 14. The TMAZ 56 grows laterally to follow the progress of the probe 52 during x-axis traversal of the FSP tool 42, now therefore extending from the run-on tab 20 into the wall of the pipeline 10.

It will be seen in Figure 4 that the probe 52 intersects the interface 58 at a shallow angle of incidence between the x-axis and the outer surface of the pipeline 10. In this example, the angle of incidence is never greater than about 30°, which is when the tip of the probe 52 first encounters the outer surface of the pipeline 10. The angle of incidence then reduces with further progress of the probe 52 into the wall of the pipeline 10. This minimises loads on the probe 52 arising from the transition from the run-on tab 20 to the pipeline 10.

The probe 52 encounters the interface 58 initially at the distal tip of the probe 52. Then, as the FSP tool 42 traverses the weld 14 in the pipeline 10, the intersection between the probe 52 and the interface 58 moves progressively along the probe 52 in the proximal direction away from the tip. With continued proximal movement along the probe 52, the intersection between the probe 52 and the interface 58 eventually reaches the root of the probe 52 near the level of the shoulder 54. This occurs as the probe 52 exits the tapering part of the run-on tab 20 via the thin edge 28.

At this point, the probe 52 of the FSP tool 42 is fully contained in the wall thickness of the pipeline 12 as shown centrally in Figure 4, in solid outline. This shows the still-spinning FSP tool 42 between the tabs 20, 22 with the probe 52 fully inserted into the wall of the pipeline 10 up to the shoulder 54 of the probe holder 50. The TMAZ 56 extends slightly ahead of the probe 52 and has now incorporated and hence repaired part of the defect 16.

Continued x-axis traversal of the FSP tool 42 further extends the TMAZ 56 circumferentially and so repairs the remainder of the defect 16. Gradually, the probe 52 exits the wall of the pipeline 10 on the opposite side to its entry point, passing through another thin convex-curved interface 60 between the outer surface of the pipeline 10 and the run-off tab 22.

Again, the probe 52 intersects the interface 60 at a shallow angle of incidence to minimise loads on the probe 52 arising from the transition from the pipeline 10 to the run-off tab 22. This angle of incidence is initially near zero where the probe 52 enters the tapering part of the run-off tab 22 via the thin edge 28. The angle of incidence then increases with further progress of the probe 52 into the run-off tab 22 but is never greater than about 30°, which is when the tip of the probe 52 leaves the wall of the pipeline 10. The TMAZ 56 now extends as a segment across the wall of the pipeline 10. That segment encompasses the former defect 16, which has therefore been stirred into the TMAZ 56 and so has been fully repaired.

When the full length of the probe 52 is embedded in the run-off tab 22 and the probe 52 has sufficiently cleared the pipeline 10, the FSP tool 42 can then be lifted out of the run-off tab 22 by retracting movement along the z-axis. The FSP tool 42 is shown at the end of the FSP pass to the right in Figure 4 in dashed lines, having been retracted from the run-off tab 22 and now no longer spinning. The full extent of the TMAZ 56 left behind by the probe 52 is also shown in dashed lines.

When the FSP pass is complete, the tabs 20, 22 are cut from the pipeline and the outer surface of the repaired weld 14 is ground flush with the adjoining pipe sections 12.

The transitions across the interfaces 58, 60 from the run-on tab 20 to the pipeline 10 and from the pipeline 10 to the run-off tab 22 are further eased because those parts are of similar materials and are at similar temperatures. Balancing the temperatures of the run-on tab 20, the pipeline 10 and the run-off tab 22 is improved by thermal coupling and conduction between the close-fitting inner faces 22 of the tabs 20, 22 and the outer face of the pipeline 10. Controlled selective heating of the tabs 20, 22 and the pipeline 10 is also possible, as will now be explained.

When the repair fitting 18 comprising the tabs 20, 22 has been attached to the pipeline 10, the pipeline 10 and the tabs 20, 22 are optionally heated to bring them closer to their softening temperature. This reduces stress and wear on the FSP tool 42. Heating suitably takes place before the probe 52 of the FSP tool 42 enters the run-on tab 20 with z-axis movement and may continue while the probe 52 traverses the pipeline 10 and the tabs 20, 22 with x-axis movement.

Cooling may also be applied selectively, locally or generally to the pipeline 10 or to the tabs 20, 22. Cooling may accelerate and control solidification of the part of the TMAZ 56 that trails the traversing probe 52. Cooling may also be used to bring the pipeline 10 and the tabs 20, 22 quickly down to a safe temperature for further operations after the FSP pass is complete.

Heating and cooling may be effected in various ways. For example, gas burners may be applied to heat the pipeline 10 and the tabs 20, 22 before the FSP pass begins. Alternatively, Figure 4 shows heat-exchange elements 62 provided in the ring segments 38 of the weld-backing device 36 to heat or cool the pipeline 10 directly. Similarly, Figure 3 shows that other heat-exchange elements 64 may be attached externally to or incorporated into the tabs 20, 22 to heat or cool the tabs 20, 22 directly. Figure 3 shows that the heat-exchange elements 64 are spaced apart across the plane of the weld 14 to allow the probe 52 of the FSP tool 42 to pass between them during traversal along the x-axis.

The heat-exchange elements 62, 64 may comprise heating elements such as electrical resistance wires or induction coils and/or cooling elements such as pipes for a cooling flow of water or gas. Indeed, a heat-exchange element 62, 64 may serve as both a heating element and a cooling element, for example by carrying a switchable flow of steam, water or gas to heat and to cool as required. Some heat-exchange elements 62, 64 behind the traversing probe 52 could be activated to cool the pipeline 10 or the tabs 20, 22 at the same time as other heat-exchange elements 62, 64 ahead of the traversing probe 52 are activated to heat the pipeline 10 or the tabs 20, 22.

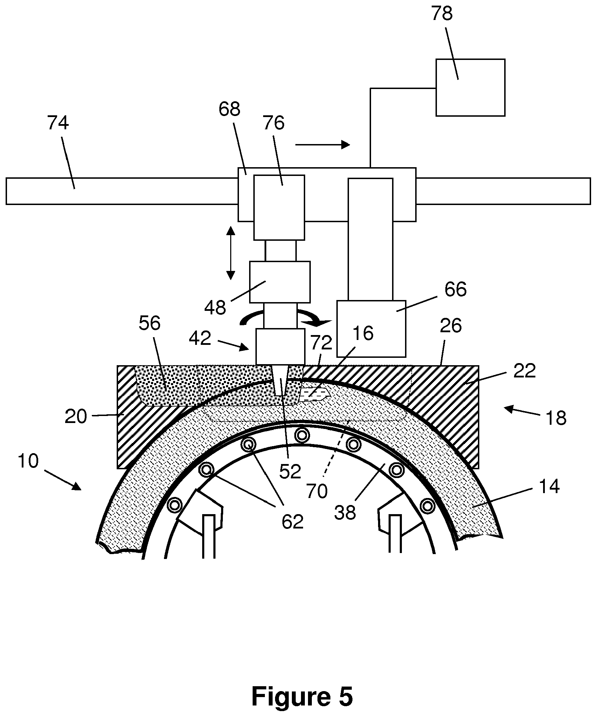

Another way to heat a ferrous alloy such as steel is to use induction heating. In this respect, Figure 5 shows an embodiment of the invention in which a pre-heat system 66 is mounted on a carriage 68 to face the pipeline 10 and the tabs 20, 22. The pre-heat system 66 may comprise one or more inductive heating coils and/or high-frequency resistance preheaters. The pre-heat system 66 creates a pre-heated zone 70 of the pipeline 10 and the tabs 20, 22.

The FSP tool 42 is also mounted on the carriage 68, in a trailing position with respect to the pre-heat system 66 in the direction of traversal along the x-axis. Thus, with continued x-axis movement, the probe 52 of the FSP tool 42 following the pre-heat system 66 enters the pre-heated zone 70. This ensures that the FSP tool 42 encounters metal that is already hot, although not yet softened. As a result, the FSP tool 42 needs to input less heat energy generated by friction and stirring to achieve and to maintain the plasticised conditions that are necessary for the FSP operation.

Figure 5 also shows a variant of the repair fitting 18 in which the tabs 20, 22 are not spaced as in the previous embodiment but instead are conjoined or integrated into a single body. Thus, the edges 28 opposed about a gap 30 of the previous embodiment are replaced by a thin web 72 that joins the tabs 20, 22 integrally. Now, the tabs 20, 22 share a single flat outer face 26. The plane of the outer face 26 no longer intersects the outer surface of the pipeline 10 but instead lies slightly outside it.

As Figure 5 shows, the web 72 is thin enough that the probe of the FSP tool 42 extends through the web 72 and projects into the wall of the pipeline 10. The FSP tool 42 projects into the wall of the pipeline 10 to a depth that is sufficient for the TMAZ 56 to encompass and repair the defect 16 as shown.

Figure 5 also shows, schematically, arrangements for effecting translational movements of the FSP tool 42 on the z- and x-axes with respect to the pipeline 10. In this respect, the carriage 68 is mounted for movement along a straight rail 74 that lies parallel to the flat outer face 26 of the tabs 20, 22. Thus, movement of the carriage 68 along the rail 74 effects x-axis translation of the FSP tool 42 across the flat outer face 26. Also, an actuator 76 is interposed between the carriage 68 and the motor 48 that supports and drives the FSP tool 42. Extension or retraction of the actuator 76 effects z-axis translation of the FSP tool 42 to drive the probe 52 into and out of the flat outer face 26.

A controller 78 provides central coordinated control of the system. Thus, the controller 78 controls the motor 48 to determine the spin speed of the FSP tool 42. The controller 78 also controls movement of the FSP tool 42 on the z- and x-axes by controlling movement of the carriage 68 and the actuator 76. Where provided, heating and/or cooling facilities such as the pre-heat system 66 and the heat-exchange elements 62,64 provided in the ring segments 38 and on the tabs 20, 22 are also controlled by the controller 78. Ideally, the controller 76 can initiate and control all operations that are necessary to execute a successful FSP pass.

As is well known in the FSW art, sensors (not shown) such as strain gauges or thermocouples may provide stress and temperature inputs to the controller 76 that are indicative of the condition of the FSP tool 42. The controller 76 may generate various control outputs in response to those inputs and also in response to operator commands.

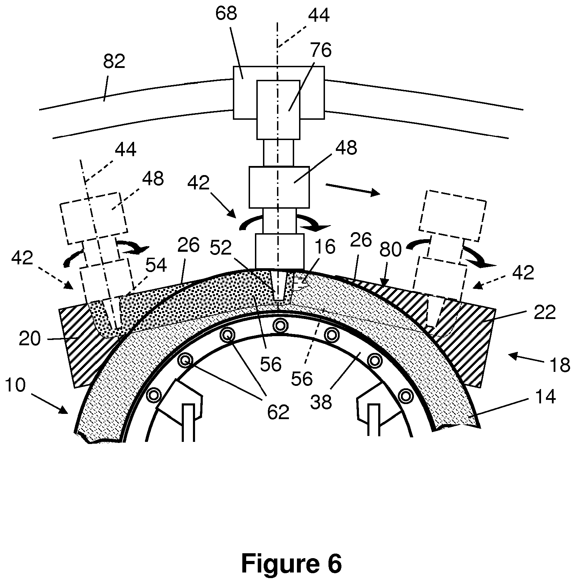

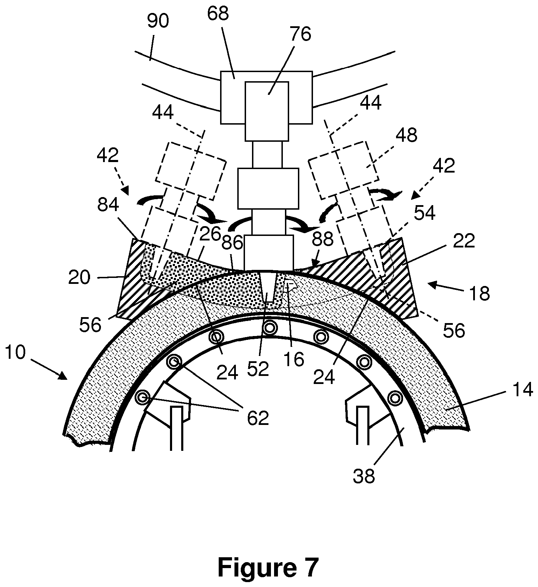

The variants of the repair fitting 18 in Figures 6 and 7 show that outer faces 26 of the tabs 20, 22 need not be coplanar and indeed need not be flat. Consequently, unlike the embodiment shown in Figures 3 and 4, the FSP tool 42 is supported to swing or pivot about an axis orthogonal to its central longitudinal axis 44 so that the orientation of the central longitudinal axis 44 changes during the FSP pass. However, as before, the FSP tool 42 may be supported by a carriage 68 via an actuator 76 and a motor 48.

To illustrate this principle clearly, Figures 6 and 7 omit the pre-heat system 66 and the controller 78 of Figure 5. It should, however, be understood that a pre-heat system 66 and a controller 78 may be present in these or any other embodiments of the invention.

In Figure 6, the repair fitting 18 is essentially the same as that shown in Figures 3 and 4, with the exception that the gap 30 shown between the opposed edges 28 in Figure 3 is wider. This may be achieved simply by lengthening the intermediate strap portions 34, also shown in Figure 3, that connect and space apart the tabs 20, 22.

The wider gap 30 between the tabs 20, 22 in Figure 6 shifts the tabs 20, 22 apart in opposite circumferential directions around the pipeline 10. Thus, the flat outer faces of the tabs 20, 22 remain substantially tangential with respect to the outer surface of the pipeline 10, but now form tangents with points on that surface that are circumferentially spaced rather than coincident.

It follows that the flat outer faces 26 of the tabs 20, 22 now lie in respective non-parallel planes that intersect along a line in the gap 30 between the tabs 20, 22. Those planes intersect with an external angle of greater than 180° between them on the radially outer side with respect to the pipeline 10.

The effect of this geometry is that the exposed portion of the pipeline 10 in the gap 30 between the tabs 20, 22 in Figure 6 is longer in the circumferential direction than it is in the embodiments shown in Figures 3 and 4. The probe 52 of the FSP tool 42 will therefore cover a greater angular span of the wall of the pipeline 10, across a wider arc with respect to the central longitudinal axis of the pipeline 10. This allows a larger defect 16 in the weld 14 to be repaired in one FSP pass.

It will be apparent from Figure 6 that the tabs 20, 22 and the exposed portion of the pipeline 10 in the gap 30 between the tabs 20, 22 together define a running surface 80 for the shoulder 56 of the FSP tool 42. That running surface 80 extends from the flat outer face 26 of the run-on tab 20 onto the flat outer face 26 of the run-off tab 22 via the outer surface of the exposed portion of the pipeline 10, which is part-circular in cross-section. Thus, the running surface 80 is generally convex when seen from the radially outer side, that is, from above as viewed in Figure 6.

Figure 6 shows that the central longitudinal axis 44 of the FSP tool 42 is kept substantially orthogonal to the running surface 80 throughout an FSP pass. In this example, this is achieved by moving the carriage 68 along a curved rail 82 that is shaped and oriented to run parallel to, and remain equidistant from, the running surface 80 along its length. Consequently, the rail 82 comprises straight end sections that correspond to the flat outer faces 26 of the tabs 20, 22, joined by a central section of part-circular curvature that corresponds to the exposed portion of the pipeline 10.

To the left in Figure 6, the FSP tool 42 is shown in dashed outline just after the start of the FSP pass. The FSP tool 42 is spinning and its probe 52 has just reached its full depth in the run-on tab 20 after being advanced on the z-axis. The probe 52 has entered the outer face 26 of the run-on tab 20 substantially orthogonally so that the shoulder 54 of the FSP tool 42 lies in a plane parallel to the outer face 26. A TMAZ 56 has begun to form around the probe 52.

Traversing movement of the FSP tool 42 on the x-axis along the running surface 78 toward the run-off tab 22 now begins. The depth of insertion of the probe 52 is kept constant as the shoulder 54 continues to bear against the outer face 26 of the run-on tab 20 and then against the outer surface of the exposed portion of the pipeline 10 between the tabs 20, 22.

As the slope of the flat outer surface 26 of the run-on tab 20 remains constant, the orientation of the central longitudinal axis 44 of the FSP tool 42 is kept substantially constant until the FSP tool 42 encounters the exposed portion of the pipeline 10 between the tabs 20, 22. Here, the orientation of the central longitudinal axis 44 is changed continuously during continued circumferential movement of the FSP tool 42 around the wall of the pipeline 10, so as to remain radially aligned with respect to the curvature of the pipeline 10. For example, the FSP tool 42 is shown in a central position in solid lines in Figure 6, with the probe 52 now engaged in the exposed portion of the pipeline 10 where it has repaired a portion of the defect 16 in the weld 14.

By the time that the FSP tool 42 encounters the flat outer face 26 of the run-off tab 22 with further x-axis movement, the central longitudinal axis 44 is orthogonal to that face 26. The FSP tool 42 is now ready to proceed with the same orientation into the run-off tab 22, eventually reaching a position like that shown in dashed lines to the right in Figure 6 where the probe 52 has cleared the wall of the pipeline 10. The FSP tool 42 is now ready to be retracted from the run-off tab 22 with reverse movement on the z-axis.

As before, during x-axis movement of the FSP tool 42, the probe 52 crosses the interfaces 58, 60 between the run-on tab 20, the wall of the pipeline 10 and the run-off tab 22. The TMAZ 56 grows laterally to follow the progress of the probe 52. The full extent of the TMAZ 56 left behind by the probe 52 is shown in dashed lines. It will be apparent that the TMAZ 56 follows the shape of the running surface 78 and so is similarly convex-curved in this example.

It is convenient that the outer faces 26 of the tabs 20, 22 are flat as shown in Figure 6 but they need not be flat, at least not along their full circumferential length. Also, the tabs 20, 22 need not be separate bodies but could instead be joined by a thin integral web, in much the same way as the embodiment of Figure 5 relates to the embodiment of Figures 3 and 4.

In the embodiment shown in Figure 7, the outer face 26 of each tab 20, 22 has a flat outward portion 84 and a concave-curved inward portion 86 that converges with the concave-curved inner face 24. The curved inward portion 86 of the outer face 26 meets the inner face 24 at a thin edge 28 like that shown in Figure 3.

The flat outward portions 84 of the outer faces 26 of the tabs 20, 22 lie in respective non-parallel planes that intersect along a line aligned with the gap between the tabs 20, 22. In this embodiment, those planes intersect with an external angle of less than 180° between them on the radially outer side with respect to the pipeline 10. The line of intersection between those planes lies under the outer surface of the pipeline 10, within the wall of the pipeline 10.

It will be apparent from Figure 7 that the tabs 20, 22 and the exposed portion of the pipeline 10 in the gap 30 between the tabs 20, 22 together define a running surface 88 for the shoulder 56 of the FSP tool 42. That running surface 88 extends from the flat outward portion 84 of the outer face 26 of the run-on tab 20 onto the flat outward portion 84 of the outer face 26 of the run-off tab 22. The running surface 88 extends via the outer surface of the exposed portion of the pipeline 10, which is part-circular in cross-section. By virtue of the radially-inward convergence of the planes of the flat outward portions 84 of the outer faces 26, the running surface 88 is generally concave when seen from the radially outer side, that is, from above as viewed in Figure 7.

To avoid a sharp step in the running surface 88 at the interfaces between the pipe 10 and the tabs 20, 22, the inward portion 86 of the outer face 26 of each tab 20, 22 curves as it nears the edge 28 so as to approach the outer surface of the pipeline 10 substantially tangentially.

The effect of this geometry is that in comparison to the preceding embodiments, the probe 52 of the FSP tool 42 will cover a lesser angular span of the wall of the pipeline 10, across a smaller arc with respect to the central longitudinal axis of the pipeline 10. This reduces the length of the FSP pass that is necessary to repair a small defect 16 in the weld 14, while allowing the probe 52 and hence the TMAZ 56 to reach the same depth into the wall of the pipeline 10 as in the preceding embodiments.

As in the embodiment shown in Figure 6, the central longitudinal axis 44 of the FSP tool 42 is kept substantially orthogonal to the running surface 88 throughout an FSP pass. Again, this is achieved by moving the carriage 68 along a curved rail 90 that is shaped and oriented to run parallel to, and remain equidistant from, the running surface 88 along its length.

To the left in Figure 7, the FSP tool 42 is shown in dashed outline just after the start of the FSP pass. The probe 52 of the FSP tool 42 has entered the flat outward portion 84 of the outer face 26 of the run-on tab 20 substantially orthogonally. A TMAZ 56 has begun to form around the probe 52.

Traversing movement of the FSP tool 42 on the x-axis along the running surface 78 toward the run-off tab 22 now begins. The shoulder 54 of the FSP tool 42 continues to bear against the outer face 26 of the run-on tab 20 as it follows the curve of the inward portion 86 of the outer face 26. Next, the shoulder 54 bears against the outer surface of the exposed portion of the pipeline 10 between the tabs 20, 22. In this respect, the FSP tool 42 is shown in a central position in solid lines in Figure 7, with the probe 52 now engaged in the exposed portion of the pipeline 10 where it has repaired a portion of the defect 16 in the weld 14.

Eventually the FSP tool 42 reaches the position shown in dashed lines to the right in Figure 7, where the probe 52 has cleared the wall of the pipeline 10. The full extent of the TMAZ 56 left behind by the probe 52 is shown in dashed lines. The FSP tool 42 is now ready to be retracted from the run-off tab 22 with reverse movement on the z-axis.

Again, during the x-axis movement of the FSP tool 42, the probe 52 crosses the interfaces 58, 60 between the run-on tab 20, the wall of the pipeline 10 and the run-off tab 22. The TMAZ 56 grows laterally to follow the progress of the probe 52. Hence, the TMAZ 56 follows the shape of the running surface 88 and so is similarly concave-curved.

Again, the tabs 20, 22 shown in Figure 7 need not be separate bodies but could instead be joined by a thin integral web, in much the same way as the embodiment of Figure 5 relates to the embodiment of Figures 3 and 4.

Many other variations are possible without departing from the inventive concept as defined by the appended claims. For example, the thin edges of the run-on and run-off tabs may abut, leaving no gap between the tabs even if the tabs are separate bodies.

Whatever structure supports the FSP tool for movement relative to the pipeline may be anchored to the pipeline for stability, for example by a clamp ring that encircles the pipeline or clamp jaws that embrace the pipeline.

It is not essential that the central longitudinal axis of the FSP tool is exactly orthogonal to the surface of the workpiece into which the probe of the tool is pressed. A small departure from true orthogonality, by say 5°, is possible. In that case, the shoulder of the tool suitably has a shallow frusto-conical shape to bear flat on one side against the surface of the workpiece.

It is not essential that the probe of the FSP tool is fully inserted into the run-on tab before traversal on the x-axis begins, or that retraction of the probe on the z-axis from the run-off tab can only begin after traversal on the x-axis has ended. For example, the excursion profile of the probe may be ramped such that the probe is advanced and/or retracted on the z-axis while x-axis movement takes place.

Guide means other than a shaped rail may be used to control the orientation of the FSP tool. For example, the tool could be supported and moved about various axes by a linkage or a system of actuators whose movements are controlled by the controller.

It is even possible to use a straight rail to traverse the FSP tool across a curved running surface. For example, the FSP tool could be pivotably mounted with respect to the rail and actuators could advance the FSP tool away from the rail or retract it toward the rail.

## Claims

1. A method of repairing a defect (16) in a pre-existing circular butt weld (14) of a pipeline (10) of steel or other ferrous or non-ferrous alloy, comprising:
attaching run-on and run-off tabs (20, 22) to the pipeline (10) on respective sides of the defect (16);
advancing a friction stir processing tool (42) into the run-on tab (20);
effecting relative movement of the tool (42) from the run-on tab (20) to the run-off tab (22) along a weld-processing path that incorporates the defect (16) to repair the defect (16) by friction stir processing of a portion of the weld (14) along the path, the weld-processing path extending along the weld (14) in a generally circumferential direction with respect to the pipeline (10);
pressing a shoulder (54) of the tool (42) against a running surface (80) while moving the tool (42) along the weld-processing path and spinning the tool (42) around an axis of rotation, the running surface (80) comprising respective running faces (26) of the run-on and run-off tabs (20, 22);
removing the tool (42) from the run-off tab (22); and
removing the run-on and run-off tabs (20, 22) from the pipeline (10).

2. The method of Claim 1, comprising keeping the axis of rotation substantially orthogonal to the running surface (80) while moving the tool (42) along the weld-processing path.

3. The method of any preceding claim, wherein the running surface (80) lies wholly outside the pipeline (10).

4. The method of Claim 1 or Claim 2, comprising pressing the shoulder (54) of the tool (42) against an outer surface of the pipeline (10) disposed between the running faces (26) of the run-on and run-off tabs (20, 22) during movement of the tool (42) along the weld-processing path.

5. The method of Claim 4, comprising reorienting the tool (42) as the shoulder (54) runs over the outer surface of the pipeline (10) to correspond with circumferential progress of the tool (42) around that outer surface.

6. The method of any of Claims 1 to 3, comprising moving the shoulder (54) of the tool (42) along the weld-processing path directly between the running faces (26) of the run-on and run-off tabs (20, 22).

7. The method of any preceding claim, comprising moving the tool (42) in a substantially straight line along the weld-processing path.

8. The method of Claim 7, comprising maintaining the orientation of the axis of rotation while moving the tool (42) along the weld-processing path.

9. The method of any of Claims 1 to 6, comprising moving the shoulder (54) of the tool (42) from a running face portion (26) of the run-on tab (20) to a running face portion (26) of the run-off tab (22), which portions lie in respective mutually-intersecting planes, and reorienting the axis of rotation while the shoulder (54) moves between those portions.

10. The method of Claim 9, wherein the mutually-intersecting planes also intersect the pipeline (10).

11. The method of any preceding claim, comprising, with movement of the tool (42) along the weld-processing path, ramping a probe 52 of the tool (42) from the run-on tab (20) radially inwardly into a wall of the pipeline (10) toward the defect (16), then radially outwardly out of the wall of the pipeline (10) from the defect (16) into the run-off tab (22).

12. The method of any preceding claim, comprising attaching the run-on and run-off tabs (20, 22) to the pipeline (10) together as parts of a single repair fitting.

13. The method of any preceding claim, comprising heating the run-on and/or run-off tabs (20, 22) before advancing the tool (42) into the run-on tab (20, 22) and/or while effecting relative movement of the tool (42) from the run-on tab (20) toward the run-off tab (22) along the weld-processing path.

14. A friction stir processing system for repairing a defect (16) in a pre-existing weld (14) of a pipeline (10) of steel or other ferrous alloy, the system comprising:
a friction stir processing tool (42);
generally wedge-shaped run-on and run-off tabs (20, 22) that each comprise an inner seating face 24 and an outer running face (26) that converges with the inner seating face 24, the tabs (20, 22) being attachable to the pipeline (10) to taper toward each other about the circumference of the pipeline (10), wherein the run-on and run-off tabs (20, 22) are configurable to be spaced apart by a gap where an outer surface of the pipeline (10) is exposed;
**characterised in that** the system further comprises tightenable straps (32) arrangeable to clamp the run-on and run-off tabs (20, 22) to the pipeline, and an adjustable intermediate strap portion (34) arrangeable to connect and space apart the run-on and run-off tabs (20, 22).

15. The system of Claim 14, wherein the inner seating face 24 of each tab (20, 22) is concave-curved with a part-circular cross-section.

16. The system of Claim 14 or Claim 15, wherein the tabs (20, 22) are in mirror-image mutual opposition.

17. The system of any of Claims 14 to 16, wherein the outer running face (26) and the inner seating face (24) meet at an edge (28), optionally wherein the curvature of the inner seating face (24) follows a circle that the outer running face (26) substantially intersects tangentially.

18. The system of any of Claims 14 to 17, wherein the tabs (20, 22) are conjoined by a web or abut each other.

19. The system of any of Claims 14 to 18, wherein the outer running faces (26) of the tabs (20, 22) are substantially coplanar.

20. A pipeline system comprising a pipeline (10) and the friction stir processing system of any of Claims 14 to 19, wherein the run-on and run-off tabs (20, 22) are attached to the pipeline (10) to taper toward each other about the circumference of the pipeline (10), and are spaced apart by a gap where an outer surface of the pipeline (10) is exposed.

## Patentansprüche

1. Verfahren zum Reparieren eines Defekts (16) in einer bereits bestehenden runden Stumpfnaht (14) einer Rohrleitung (10) aus Stahl oder einer anderen Eisen- oder Nichteisenlegierung, umfassend:
Anbringen von Anlauf- und Ablaufstücken (20, 22) an der Rohrleitung (10) an jeweiligen Seiten des Defekts (16);
Vorschieben eines Reibrührbearbeitungswerkzeugs (42) in das Anlaufstück (20);
Bewirken einer relativen Bewegung des Werkzeugs (42) von dem Anlaufstück (20) zu dem Ablaufstück (22) entlang eines Schweißnahtbearbeitungswegs, der den Defekt (16) enthält, um den Defekt (16) durch Reibrührbearbeitung eines Abschnitts der Schweißnaht (14) entlang des Wegs, wobei sich der Schweißnahtbearbeitungsweg entlang der Schweißnaht (14) in einer im Allgemeinen peripheren Richtung in Bezug auf die Rohrleitung (10) erstreckt;
Drücken einer Schulter (54) des Werkzeugs (42) gegen eine Laufoberfläche (80), während das Werkzeug (42) entlang des Schweißnahtbearbeitungswegs bewegt wird, und Drehen des Werkzeugs (42) um eine Rotationsachse, die Laufoberfläche (80) umfassend jeweilige Laufoberflächen (26) des Anlauf- und des Ablaufstücks (20, 22);
Entfernen des Werkzeugs (42) von dem Ablaufstück (22); und
Entfernen des Anlauf- und des Ablaufstücks (20, 22) von der Rohrleitung (10).

2. Verfahren nach Anspruch 1, umfassend ein Halten der Rotationsachse im Wesentlichen orthogonal zu der Laufoberfläche (80), während das Werkzeug (42) entlang des Schweißnahtbearbeitungswegs bewegt wird.

3. Verfahren nach einem der vorstehenden Ansprüche, wobei die Laufoberfläche (80) vollständig außerhalb der Rohrleitung (10) liegt.

4. Verfahren nach Anspruch 1 oder 2, umfassend das Drücken der Schulter (54) des Werkzeugs (42) gegen eine Außenoberfläche der Rohrleitung (10), die zwischen den Laufoberflächen (26) des Anlauf- und des Ablaufstücks (20, 22) angeordnet ist, während der Bewegung des Werkzeugs (42) entlang des Schweißnahtbearbeitungswegs.

5. Verfahren nach Anspruch 4, umfassend ein Neuausrichten des Werkzeugs (42), wenn die Schulter (54) über die Außenoberfläche der Rohrleitung (10) läuft, um dem peripheren Fortschritt des Werkzeugs (42) um diese Außenoberfläche zu entsprechen.

6. Verfahren nach einem der Ansprüche 1 bis 3, umfassend das Bewegen der Schulter (54) des Werkzeugs (42) entlang des Schweißnahtbearbeitungswegs direkt zwischen den Laufoberflächen (26) des Anlauf- und des Ablaufstücks (20, 22).

7. Verfahren nach einem der vorstehenden Ansprüche, umfassend das Bewegen des Werkzeugs (42) in einer im Wesentlichen geraden Linie entlang des Schweißnahtbearbeitungswegs.

8. Verfahren nach Anspruch 7, umfassend ein Beibehalten der Ausrichtung der Rotationsachse, während das Werkzeug (42) entlang des Schweißnahtbearbeitungswegs bewegt wird.

9. Verfahren nach einem der Ansprüche 1 bis 6, umfassend das Bewegen der Schulter (54) des Werkzeugs (42) von einem Laufflächenabschnitt (26) des Anlaufstücks (20) zu einem Laufflächenabschnitt (26) des Ablaufstücks (22), wobei die Abschnitte in jeweiligen sich gegenseitig schneidenden Ebenen liegen, und das Neuausrichten der Rotationsachse, während sich die Schulter (54) zwischen diesen Abschnitten bewegt.

10. Verfahren nach Anspruch 9, wobei die sich gegenseitig schneidenden Ebenen auch die Rohrleitung (10) schneiden.

11. Verfahren nach einem der vorstehenden Ansprüche, umfassend bei Bewegung des Werkzeugs (42) entlang des Schweißnahtbearbeitungswegs, Anlaufenlassen einer Spitze 52 des Werkzeugs (42) von dem Anlaufstück (20) radial nach innen in eine Wand der Rohrleitung (10) zu dem Defekt (16), dann radial nach außen aus der Wand der Rohrleitung (10) von dem Defekt (16) in das Ablaufstück (22).

12. Verfahren nach einem der vorstehenden Ansprüche, umfassend das Anbringen des Anlauf- und des Ablaufstücks (20, 22) an der Rohrleitung (10) zusammen als Teile einer einzelnen Reparaturanpassung.

13. Verfahren nach einem der vorstehenden Ansprüche, umfassend ein Erhitzen des Anlauf- und/oder des Ablaufstücks (20, 22), bevor das Werkzeug (42) in das Anlaufstück (20, 22) vorgeschoben wird und/oder während eine relative Bewegung des Werkzeugs (42) von dem Anlaufstück (20) zu dem Ablaufstück (22) entlang des Schweißnahtbearbeitungswegs bewirkt wird.

14. Reibrührbearbeitungssystem zum Reparieren eines Defekts (16) in einer bereits bestehenden Schweißnaht (14) einer Rohrleitung (10) aus Stahl oder einer anderen Eisenlegierung, das System umfassend:
ein Reibrührbearbeitungswerkzeug (42);
ein im Allgemeinen keilförmiges Anlauf- und Ablaufstück (20, 22), die jeweils eine innere Sitzoberfläche 24 und eine äußere Laufoberfläche (26) umfassen, die mit der inneren Sitzoberfläche 24 zusammenläuft, wobei die Stücke (20, 22) an der Rohrleitung (10) anbringbar sind, um sich zueinander um die Peripherie der Rohrleitung (10) zu verjüngen, wobei das Anlauf- und das Ablaufstück (20, 22) konfigurierbar sind, um durch einen Spalt beabstandet zu sein, an dem eine Außenoberfläche der Rohrleitung (10) freigelegt ist;
**dadurch gekennzeichnet, dass** das System ferner festziehbare Riemen (32), die angeordnet werden können, um das Anlauf- und das Ablaufstück (20, 22) an der Rohrleitung festzuklemmen, und einen einstellbaren Zwischenriemenabschnitt (34) umfasst, der angeordnet werden kann, um das Anlauf- und das Ablaufstück (20, 22) zu verbinden und voneinander zu beabstanden.

15. System nach Anspruch 14, wobei die innere Sitzoberfläche 24 jedes Stücks (20, 22) konkav gekrümmt mit einem teilkreisförmigen Querschnitt ist.

16. System nach Anspruch 14 oder 15, wobei die Stücke (20, 22) spiegelbildlich einander gegenüberliegen.

17. System nach einem der Ansprüche 14 bis 16, wobei sich die Außenlauffläche (26) und die innere Sitzfläche (24) an einer Kante (28) treffen, optional wobei die Krümmung der inneren Sitzfläche (24) einem Kreis folgt, den die äußere Lauffläche (26) im Wesentlichen tangential schneidet.

18. System nach einem der Ansprüche 14 bis 17, wobei die Stücke (20, 22) durch eine Rippe verbunden sind oder aneinander anstoßen.

19. System nach einem der Ansprüche 14 bis 18, wobei die äußeren Laufflächen (26) der Stücke (20, 22) im Wesentlichen koplanar sind.

20. Rohrleitungssystem, umfassend eine Rohrleitung (10) und das Reibrührverarbeitungssystem nach einem der Ansprüche 14 bis 19, wobei das Anlauf- und das Ablaufstück (20, 22) an der Rohrleitung (10) angebracht sind, um sich zueinander um die Peripherie der Rohrleitung (10) zu verjüngen, und durch einen Spalt beabstandet sind, an dem eine äußere Oberfläche der Rohrleitung (10) freigelegt ist.

## Revendications

1. Procédé destiné à la réparation d'un défaut (16) dans une soudure bout à bout circulaire préexistante (14) d'une canalisation (10) en acier ou en un autre alliage ferreux ou non ferreux, comprenant :
la fixation d'appendices de début de cordon et de fin de cordon (20, 22) à la canalisation (10) sur des côtés respectifs du défaut (16) ;
le fait de faire avancer un outil de traitement par friction-malaxage (42) dans l'appendice de début de cordon (20) ;
le fait d'effectuer un mouvement relatif de l'outil (42) de l'appendice de début de cordon (20) à l'appendice de fin de cordon (22) le long d'un trajet de traitement de soudure qui incorpore le défaut (16) pour réparer le défaut (16) par traitement par friction-malaxage d'une partie de la soudure (14) le long du trajet, le trajet de traitement de soudure s'étendant le long de la soudure (14) dans une direction généralement circonférentielle par rapport à la canalisation (10) ;
le fait de presser un épaulement (54) de l'outil (42) contre une surface de transition (80) tout en déplaçant l'outil (42) le long du trajet de traitement de soudure et le fait de faire tourner l'outil (42) autour d'un axe de rotation, la surface de transition (80) comprenant des faces de transition (26) respectives des appendices de début de cordon et de fin de cordon (20, 22) ;
l'enlèvement de l'outil (42) de l'appendice de fin de cordon (22) ; et
l'enlèvement des appendices de début de cordon et de fin de cordon (20, 22) de la canalisation (10).

2. Procédé selon la revendication 1, comprenant le fait de garder l'axe de rotation sensiblement orthogonalement à la surface de transition (80) tout en déplaçant l'outil (42) le long du trajet de traitement de soudure.

3. Procédé selon l'une quelconque des revendications précédentes, dans lequel la surface de transition (80) se trouve entièrement à l'extérieur de la canalisation (10).

4. Procédé selon la revendication 1 ou la revendication 2, comprenant le fait de presser l'épaulement (54) de l'outil (42) contre une surface externe de la canalisation (10) disposée entre les faces de transition (26) des appendices de début de cordon et de fin de cordon (20, 22) pendant un mouvement de l'outil (42) le long du trajet de traitement de soudure.

5. Procédé selon la revendication 4, comprenant la réorientation de l'outil (42) lorsque l'épaulement (54) passe sur la surface externe de la canalisation (10) pour correspondre à une progression circonférentielle de l'outil (42) autour de ladite surface externe.

6. Procédé selon l'une quelconque des revendications 1 à 3, comprenant le déplacement de l'épaulement (54) de l'outil (42) le long du trajet de traitement de soudage directement entre les faces de transition (26) des appendices de début de cordon et de fin de cordon (20, 22).

7. Procédé selon l'une quelconque des revendications précédentes, comprenant le déplacement de l'outil (42) selon une ligne sensiblement droite le long du trajet de traitement de soudure.

8. Procédé selon la revendication 7, comprenant le maintien de l'orientation de l'axe de rotation tout en déplaçant l'outil (42) le long du trajet de traitement de soudure.

9. Procédé selon l'une quelconque des revendications 1 à 6, comprenant le déplacement de l'épaulement (54) de l'outil (42) d'une partie de face de transition (26) de l'appendice de début de cordon (20) à une partie de face de transition (26) de l'appendice de fin de cordon (22), lesdites parties se trouvent dans des plans respectifs se croisant mutuellement, et la réorientation de l'axe de rotation pendant que l'épaulement (54) se déplace entre lesdites parties.

10. Procédé selon la revendication 9, dans lequel les plans se croisant mutuellement croisent également la canalisation (10).

11. Procédé selon l'une quelconque des revendications précédentes, comprenant, avec le mouvement de l'outil (42) le long du trajet de traitement de soudure, le fait d'incliner une sonde 52 de l'outil (42) depuis l'appendice de début de cordon (20) radialement vers l'intérieur dans une paroi de la canalisation (10) vers le défaut (16), puis radialement vers l'extérieur hors de la paroi de la canalisation (10) depuis le défaut (16) dans l'appendice de fin de cordon (22).

12. Procédé selon l'une quelconque des revendications précédentes, comprenant la fixation des appendices de début de cordon et de fin de cordon (20, 22) à la canalisation (10) ensemble en tant qu'éléments d'un seul raccord de réparation.

13. Procédé selon l'une quelconque des revendications précédentes, comprenant le chauffage des appendices de début de cordon et/ou de fin de cordon (20, 22) avant le fait de faire avancer l'outil (42) dans l'appendice de début de cordon (20, 22) et/ou tout en effectuant un mouvement relatif de l'outil (42) depuis l'appendice de début de cordon (20) vers l'appendice de fin de cordon (22) le long du trajet de traitement de soudure.

14. Système de traitement par friction-malaxage destiné à la réparation d'un défaut (16) dans une soudure préexistante (14) d'une canalisation (10) en acier ou en un autre alliage ferreux, le système comprenant :
un outil de traitement par friction-malaxage (42) ;
des appendices de début de cordon et de fin de cordon (20, 22) généralement en forme de coin qui comprennent chacun une face d'assise interne 24 et une face de transition externe (26) qui converge avec la face d'assise interne 24, les appendices (20, 22) pouvant être fixés à la canalisation (10) pour se rétrécir l'un vers l'autre autour de la circonférence de la canalisation (10), les appendices de début de cordon et de fin de cordon (20, 22) pouvant être conçus pour être espacés par un espace où une surface externe de la canalisation (10) est exposée ;
**caractérisé en ce que** le système comprend en outre des sangles pouvant être resserrées (32) pouvant être disposées pour serrer les appendices de début de cordon et de fin de cordon (20, 22) sur la canalisation, et une partie de sangle intermédiaire réglable (34) pouvant être disposée pour relier et espacer les appendices de début de cordon et de fin de cordon (20, 22).

15. Système selon la revendication 14, dans lequel la face d'assise interne 24 de chaque appendice (20, 22) est incurvée de manière concave avec une section transversale partiellement circulaire.

16. Système selon la revendication 14 ou la revendication 15, dans lequel les appendices (20, 22) sont en opposition mutuelle en image miroir.

17. Système selon l'une quelconque des revendications 14 à 16, dans lequel la face de transition externe (26) et la face d'assise interne (24) se rejoignent au niveau d'un bord (28), éventuellement dans lequel la courbure de la face d'assise interne (24) suit un cercle que la face de transition externe (26) croise sensiblement tangentiellement.

18. Système selon l'une quelconque des revendications 14 à 17, dans lequel les appendices (20, 22) sont joints par une toile ou viennent en butée l'un contre l'autre.

19. Système selon l'une quelconque des revendications 14 à 18, dans lequel les faces de transition externes (26) des appendices (20, 22) sont sensiblement coplanaires.

20. Système de canalisation comprenant une canalisation (10) et le système de traitement par friction-malaxage selon l'une quelconque des revendications 14 à 19, dans lequel les appendices de début de cordon et de fin de cordon (20, 22) sont fixés à la canalisation (10) pour se rétrécir l'un vers l'autre autour de la circonférence de la canalisation (10), et sont espacés par un espace où une surface externe de la canalisation (10) est exposée.
